Europäisches Patentamt

European Patent Office

Office européen des brevets

(19)

(11) Veröffentlichungsnummer: **0 103 101 B1**

(12) **EUROPÄISCHE PATENTSCHRIFT**

(45) Veröffentlichungstag der Patentschrift:
09.03.88

(21) Anmeldenummer: **83106856.4**

(22) Anmeldetag: **13.07.83**

(51) Int. Cl.⁴: **B 41 F 13/08**

(54) Vorrichtung zur Reduzierung der durch die Kanalüberrollung in einem Druckwerkzylinder angeregten Biegeschwingungen.

(30) Priorität: **13.08.82 DE 3230118**

(43) Veröffentlichungstag der Anmeldung:
**21.03.84 Patentblatt 84/12**

(45) Bekanntmachung des Hinweises auf die Patenterteilung:
**09.03.88 Patentblatt 88/10**

(84) Benannte Vertragsstaaten:
**CH DE FR GB LI SE**

(56) Entgegenhaltungen:
**DE - A - 3 012 060**
**GB - A - 2 073 368**
**US - A - 3 521 340**
**US - A - 4 125 073**

(73) Patentinhaber: **M.A.N.-ROLAND Druckmaschinen Aktiengesellschaft, Christian-Pless-Strasse 6-30, D-6050 Offenbach/Main (DE)**

(72) Erfinder: **Köbler, Ingo, Zeisigweg 7, D-8901 Anhausen (DE)**
Erfinder: **Stöckl, Herbert, Erlkönigweg 35, D-8900 Augsburg (DE)**
Erfinder: **Meinke, Peter, Dr., Meisenweg 6, D.8031 Steinbach (DE)**
Erfinder: **Engl, Albert, Haus Nr. 12, D-8151 Reitham (DE)**
Erfinder: **Hechler, Hatto, Dr., Zieglerstrasse 7, D-8900 Augsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zur Reduzierung der durch die Kanalüberrollung in einem Druckwerkzylinder angeregten Biegeschwingungen mit mindestens einer in dem Druckwerkzylinder angeordneten Masse, die durch den nach Überrollen der Zylinderkanäle auftretenden Stoss über den Mantel des Druckwerkzylinders in Bewegung versetzbar ist.

Aus der US-Patentschrift 4 125 073 ist es bekannt, die nach Überrollen der Zylindergruben zweier benachbarter Druckwerkzylinder auftretenden Stösse zu dämpfen, so dass die durch diese hervorgerufenen Biegeschwingungen der Druckwerkzylinder in ihrer Amplitude verringert werden und somit schneller abklingen. Bei dieser bekannten Dämpfungseinrichtung wird eine in dem Zylinder exzentrisch in einem Schlitz gelagerte Kugel, die in Folge ihrer Zentrifugalkraft beim Überrollen der Zylinderkanäle an dem Mantel des Zylinders anliegt, durch den beim Auftreffen der Zylinder nach Überrollen der Kanäle auftretenden Stoss in Richtung Achsmittellinie beschleunigt. Im weiteren Verlauf der Zylinderrotation bringt die Zentrifugalkraft die Kugel wieder in Anlage mit dem Zylindermantel, und zwar bevor der nächste Überrollvorgang stattfindet. Bei dieser bekannten Einrichtung ist es von Nachteil, dass durch die Bewegung der Kugel eine erhebliche zusätzlich Unruhe in dem Zylinder auftritt.

Aufgabe der Erfindung ist es, eine Vorrichtung der eingangs bezeichneten Gattung zu schaffen, mit der eine wirkungsvolle Reduzierung der Biegeschwingungsamplituden möglich ist, ohne dass die Dämpfungsmittel eine unerwünschte Unruhe in dem Druckwerkzylinder verursachen.

Dieser Aufgabe wird durch die Anwendung der Merkmale im Kennzeichen des Patentanspruches 1 gelöst. Vorteilhafte Weiterbildungen ergeben sich aus den Unteransprüchen sowie aus der Beschreibung in Verbindung mit den Zeichnungen.

Im folgenden wird die Erfindung beispielhaft anhand der Zeichnungen erläutert. In diesen zeigen:

Figur 1: In schematischer Darstellung zwei in Seitenwänden gelagerte Druckwerkzylinder;

Figur 2: eine schematisierte Ansicht der in Figur 1 gezeigten Druckwerkzylinder im Querschnitt;

Figur 3: den Biegeschwingungsverlauf eines rotierenden Druckwerkzylinders und

Figur 4: ein mit dem erfindungsgemässen Schwingungsdämpfer ausgestatteter Druckwerkszylinder im Längsschnitt.

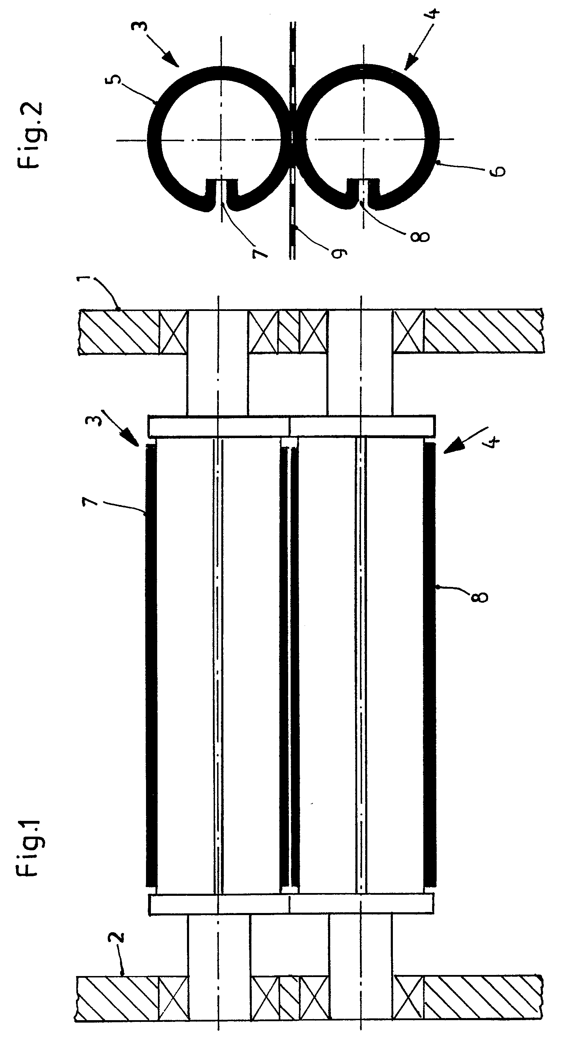

Figur 1 und 2 zeigen eine Druckwerkzylinderanordnung, wie sie üblicherweise in Offsetrotationsdruckmaschinen verwendet wird. Zwischen zwei Seitenwänden 1 und 2 der Maschine sind in nicht näher bezeichneten Lagern zwei Gummituchzylinder 3, 4 angeordnet, die jeweils an ihren Enden mit Schmitzringen ausgestattet sein können. Der Gummituchzylinder 3 ist mit einem Gummituch 5 bespannt. Jeder der Gummituchzylinder 3, 4 weist einen in Achsrichtung verlaufenden Kanal 7, 8 auf. Wie in Figur 2 angedeutet, kann mit einer derartigen Zylinderanordnung ein Druckträger 9, bspw. eine Papierbahn beidseitig bedruckt werden.

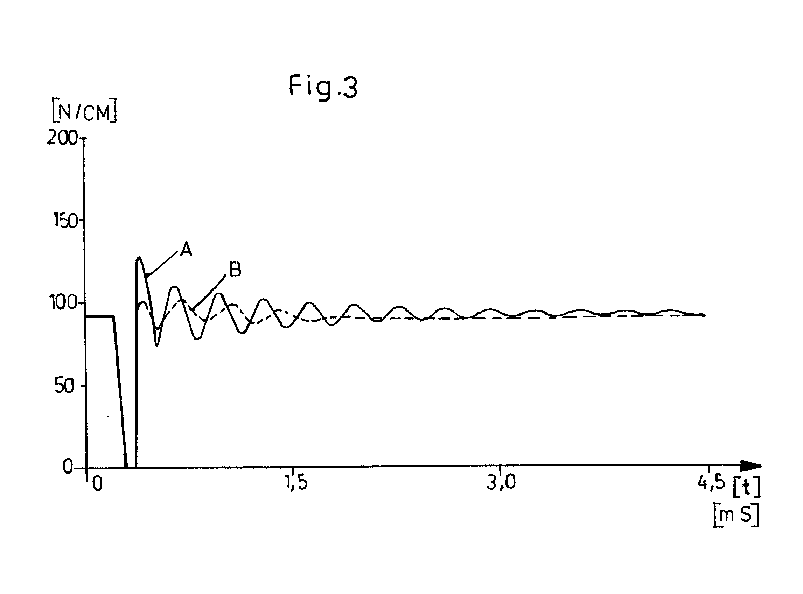

Beim Überrollen der Zylinderkanäle 7, 8 der aneinander angepressten Gummituchzylinder 3, 4 wird zunächst die Kraft entlang der Drucklinie abgebaut und kann, wie aus Figur 3 ersichtlich, den Wert 0 annehmen. Figur 3 lässt weiterhin erkennen, dass nach Überrollen der Zylinderkanäle 7, 8 beim Wiederauftreffen der Kanalkanten ein erheblicher Stoss auftritt, der zu Unruhen im Druckbild (Streifenbildung) und zu einem frühzeitigen Verschleiss der Schmitzringe führen kann. Die Kurve A in Figur 3 zeigt, dass die durch diesen Stoss hervorgerufenen Schwingungen nur langsam im weiteren Verlauf der Zylinderrotation abklingen.

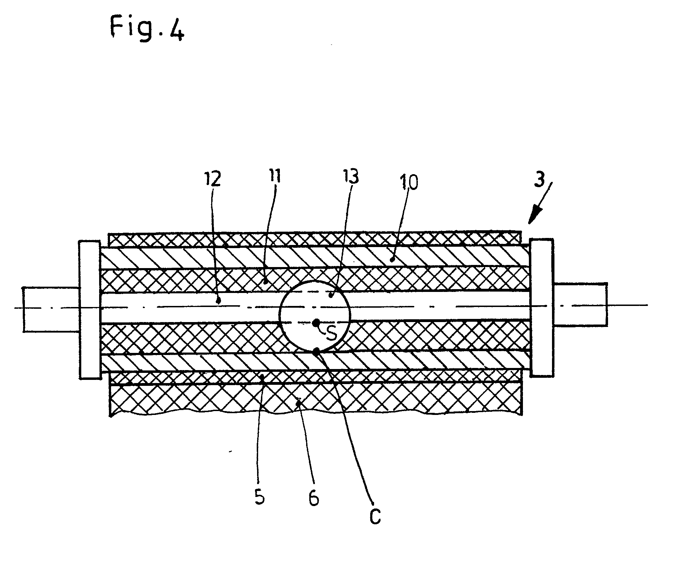

Figur 4 zeigt schematisch im Längsschnitt einen Druckwerkzylinder 3, dessen Mantel 10 innen mit einer Dämpfungsmasse 11 versehen ist. Diese Dämpfungsmasse 11 bettet eine elastische Achse 12 ein. Auf der Achse 12 ist eine starre Masse, bspw. in Form einer Kugel 13, exzentrisch angeordnet. Die Achse 12 kann einen kreisförmigen oder einen anderen, z.B. rechteckförmigen Querschnitt aufweisen und sich von einer Stirnseite des Zylinders 3 bis zur anderen erstrecken. Es ist auch möglich, die elastische Achse 12 nur an einer Stirnseite gegebenenfalls auch mit einer Zwischenverbindung, des Zylinders zu fixieren. Es kommt wesentlich darauf an, dass die als eingebetteter elastischer Träger wirkende Achse die Zusatzmasse, d.h. hier die Kugel 13, elastisch gegen den Zylindermantel 10 drückt.

Die Masse in Form einer Kugel 13 kann für diesen Zweck eine Bohrung aufweisen, mit einer dem Durchmesser der Achse 12 entsprechenden Grösse.

Wie Figur 4 erkennen lässt, sitzt die metallische Kugel 13 so auf der Achse 12, dass sie an Punkt C soeben den Mantel 10 des Druckzylinders 3 berührt, wenn der Druckwerkzylinder 3 an den benachbarten Druckwerkzylinder 4 (Figur 1 und 2) angestellt ist. Im Zustand «Druck ab» muss die Kugel 13 nicht an dem Mantel 10 anliegen. Der Schwerpunkt S liegt zwischen der Achsmittellinie und dem Mantel 10. Der nach Überrollen der Kanäle 7 und 8 auftretende Stoss wird über den Mantel 10 direkt auf die Kugel 13 übertragen, so dass diese nach oben (in Figur 4) beschleunigt wird. Das gleiche gilt für die Achse 12, da diese starr mit der Kugel 13 verbunden ist. Die durch den Stoss hervorgerufenen Schwingungen der Kugel 13 und der Achse 12 werden durch die Dämpfungsmasse 11 dissipiert, so dass sich der in Figur 3 gezeigte Kurvenverlauf B einstellt. Die Kurve B lässt im Vergleich mit der Kurve A erkennen, dass sowohl eine Reduzierung der Stossauswirkung auf den Druckwerkzylinder als auch ein schnelleres Abklingen der Biegeschwingungen erreicht wird. Die Kurve A zeigt die in einem ungedämpften Druckwerkzylinder auftretenden Schwingungen.

In Figur 4 ist lediglich eine einzige Kugel in der Mitte des Druckwerkzylinders 3 gezeigt. Erforderlichenfalls können jedoch auch mehrere solcher Massen nebeneinander auf der Zylinderachse 12 angebracht werden. Die Grösse dieser Massen wird so festgelegt, dass die Eigenschwingung dieses durch Massen und Achse gebildeten Schwingungssystems, angeregt durch den Kanalstoss, eine vorgegebene Frequenz, vorzugsweise die Biegeeigenfrequenz des Druckwerkzylinders, aufweist. In Figur 4 ist die erfindungsgemässe Vorrichtung zur Schwingungsdämpfung in dem oberen Gummituchzylinder 3 eingebaut. Diese Vorrichtung kann ebenso in dem unteren Gummituchzylinder 4, sowie an den beiden mit diesen Zylindern zusammenarbeitenden Plattenzylindern (nicht gezeigt) verwendet werden.

Bezugszeichenliste:
1 Seitenwand
2 Seitenwand
3 Gummizylinder
4 Gummizylinder
5 Gummituch
6 Gummituch
7 Zylindergrube
8 Zylindergrube
9 Druckträger
10 Zylindermantel
11 Dämpfungsmasse
12 Zylinderachse
13 Absorbermasse oder Zusatzmasse
A = Berührungspunkt
S = Schwerpunkt bezogen auf die Achsmittellinie

**Patentansprüche**

1. Vorrichtung zur Reduzierung der durch die Kanalüberrollung in einem Druckwerkzylinder angeregten Biegeschwingungen mit mindestens einer in dem Druckwerkzylinder angeordneten Masse, die durch den nach Überrollen der Zylinderkanäle auftretenden Stoss über den Mantel des Druckwerkzylinders in Bewegung versetzbar ist, dadurch gekennzeichnet, dass der Mantel (10) innen mit einer Dämpfungsmasse (11) gefüllt ist, dass an einer im Druckwerkzylinder (3) angeordneten, diesen mindestens teilweise durchsetzenden elastischen Achse (12) mindestens eine Zusatzmasse (13) befestigt ist, die zusammen mit der Achse (12) in der Dämpfungsmasse (11) eingebettet ist und bei angestellten Zylindern (3, 4) in Berührung (c) mit dem Mantel (10) steht, und dass der Masseschwerpunkt (S) der Zusatzmasse (13) bei abgestellten und angestellten Zylindern (3, 4) zwischen der Achsmittellinie und dem Berührungspunkt (C) der Zusatzmasse (13) mit dem Mantel (10) liegt.

2. Vorrichtung nach Anspruch 1, dadurch gekennzeichnet, dass die Zusatzmasse (13) eine Kugel ist.

3. Vorrichtung nach Anspruch 1, dadurch gekennzeichnet, dass die Zusatzmasse (13) ein Ellipsoid ist.

4. Vorrichtung nach Anspruch 1, dadurch gekennzeichnet, dass die Zusatzmasse (13) in Achsrichtung des Druckwerkzylinders (3) gesehen, in der Mitte angeordnet ist.

5. Vorrichtung nach einem der vorangehenden Ansprüche, dadurch gekennzeichnet, dass die Dämpfungsmasse (11) einen Dämpfungsbeiwert

$$d_m > 5 \times 10^4 \left[ \frac{Ns}{m} \right]$$

aufweist.

**Claims**

1. Device for reducing the bending vibrations in a printing cylinder caused by rolling over the groove, having at least one masse arranged in the printing cylinder which can be set in motion, via the casing of the printing cylinder, by the shock which occurs after rolling over the cylinder grooves, characterised in that the casing (10) is filled on the inside with a damping substance (11), in that, on a resilient shaft (12), arranged in the printing cylinder (3) and passing at least partially through it, at least one additional body (13) ist secured which is embedded together with the shaft (12) in the damping substance (11) and is in contact (c) with the casing (10) when the cylinders (3, 4) are pessed together, and in that, whether the cylinders (3, 4) are together or apart, the centre of gravity (S) of the additional (13) lies between the shaft centre line and the point of contact (c) of the additional body (13) with the casing (10).

2. Device according to claim 1, characterised in that the additional body (13) is a sphere.

3. Device according to claim 1, characterised in that the additional body (13) is an ellipsoid.

4. Device according to claim 1, characterised in that the additional body (13) is arranged in the middle of the printing cylinder (3), as seen along the axis.

5. Device according to one of the preceding claims, characterised in that the damping substance (11) has a damping coefficient

$$d_m > 5 \times 10^4 \left[ \frac{Ns}{m} \right] .$$

**Revendications**

1. Dispositif destiné à réduire les vibrations de flexion engendrées dans un cylindre d'impression par le franchissement des gorges, comprenant au moins une masse agencée dans le cylindre, qui peut être mise en mouvement, par l'intermédiaire de la paroi du cylindre, par le choc qui se produit après le franchissement des gorges des cylindres, caractérisé en ce que la paroi (10) est remplie intérieurement d'une masse amortisseuse (11), en ce que, sur un axe élastique (12) agencé dans le cylindre d'impression (3) et qui traverse au moins partiellement ce cylindre, est fixée au moins une masse additionnelle (13) qui est noyée dans la masse amortisseuse (11) conjointement avec l'axe (12), et qui est en contact (c) avec la paroi (10) lorsque les cylindres (3, 4) sont mis en pression, et en ce que le centre de gravité (5) de la masse additionnelle (13) est situé entre l'axe géométrique de l'axe et le point de contact (c) entre la masse additionnelle (13) et la paroi (10) lorsque les cylindres (3, 4) sont mis hors pression aussi bien que lorsqu'ils sont mis en pression.

2. Dispositif selon la revendication 1, caractérisé en ce que la masse additionnelle (13) est une bille.

3. Dispositif selon la revendication 1, caractérisé en ce que la masse additionnelle (13) est un elipsoïde.

4. Dispositif selon la revendication 1, caractérisé en ce que la masse additionnelle (13) est située au milieu, considéré dans la direction axiale, du cylindre d'impression (3).

5. Dispositif selon l'une des revendications précédentes, caractérisé en ce que la masse amortisseuse (11) présente un coefficient d'amortissement

$$d_m > 5 \times 10^4 \left[ \frac{Ns}{m} \right].$$

Fig.2

Fig.1

Fig.3

0 103 101

Fig.4